# EUROPÄISCHE PATENTANMELDUNG

(11) **EP 1 371 917 A2**
(43) Veröffentlichungstag der Anmeldung: **17.12.2003**
(21) Anmeldenummer: 03002265.1
(22) Anmeldetag: 01.02.2003
(51) Int. Cl.: F24H 9/20, F24H 3/06

(54) **Wärmetauscheranordnung**

(30) Priorität: 12.06.2002 DE 10226081
(71) Anmelder: J. Eberspächer GmbH & Co. KG, 73730 Esslingen (DE)
(72) Erfinder: Herrmann, Jesko, 72660 Beuren (DE); Blaschke, Walter, 73779 Deizisau (DE)

(57) **Zusammenfassung**

Eine Wärmetauscheranordnung, insbesondere für ein Fahrzeugheizgerät, umfasst einen von einer Gehäuseanordnung (26, 28) umschlossenen Fluidströmungsraum (30) sowie eine Temperatursensoranordnung (34) zur Erfassung einer mit der Temperatur eines den Fluidstömungsraum (30) durchströmenden Fluids in Zusammenhang stehenden Größe, wobei die Temperatursensoranordnung (34) wenigstens einen Temperatursensor (36, 38) umfasst, welcher in das Material eines wenigstens einen Teil der Gehäuseanordnung (26, 28) bildenden Gehäuseelementes (28) wenigstens teilweise eingebettet ist.

## Beschreibung

Die vorliegende Erfindung betrifft eine Wärmetauscheranordnung, insbesondere für ein Fahrzeugheizgerät, umfassend einen von einer Gehäuseanordnung umschlossenen Fluidströmungsraum sowie eine Temperatursensoranordnung zur Erfassung einer mit der Temperatur eines den Fluidstömungsraum durchströmenden Fluids in Zusammenhang stehenden Größe.

Zur Ansteuerung eines Heizgerätes, wie es z. B. als Standheizung oder Zuheizer in einem Kraftfahrzeug zum Einsatz kommen kann, ist es von Bedeutung, Information über das zu erwärmende Medium zu erlangen, um bei zu geringer Mediumtemperatur die Heizleistung zu erhöhen bzw. bei zu hoher Mediumtemperatur die Heizleistung zu senken. Dazu ist es bekannt, in demjenigen Bereich, in welchem die in einem Heizbrenner erzeugte Wärmeenergie auf das Medium übertragen wird, dessen Temperatur zu erfassen. Zu diesem Zwecke werden in eine Wärmetauscheranordnung Temperatursensoren eingesetzt, wobei hierfür in Gehäuseelementen der Wärmetauscheranordnung Öffnungen bzw. Bohrungen vorhanden sind, in welche unter Einsatz von Dichtungselementen dann die Temperatursensoren eingesetzt werden. Neben dem Problem der Bereitstellung eines dichten Abschlusses ist das zusätzliche Eingliedern der Temperatursensoren in derartige Gehäuseelemente ein die Gesamtkosten einer derartigen Wärmetauscheranordnung bzw. auch eines Heizgerätes erhöhender Arbeitsvorgang.

Es ist die Aufgabe der vorliegenden Erfindung, eine einfach und kostengünstig aufzubauende Wärmetauscheranordnung vorzusehen, bei welcher die Möglichkeit geschaffen ist, die Temperatur eines diese durchströmenden Fluids zu erfassen.

Erfindungsgemäß wird diese Aufgabe gelöst durch eine Wärmetauscheranordnung, insbesondere für ein Fahrzeugheizgerät, umfassend einen von einer Gehäuseanordnung umschlossenen Fluidströmungsraum sowie eine Temperatursensoranordnung zur Erfassung einer mit der Temperatur eines den Fluidstömungsraum durchströmenden Fluids in Zusammenhang stehenden Größe, wobei die Temperatursensoranordnung wenigstens einen Temperatursensor umfasst, welcher in das Material eines wenigstens einen Teil der Gehäuseanordnung bildenden Gehäuseelementes wenigstens teilweise eingebettet ist.

Wesentlich ist bei der erfindungsgemäßen Wärmetauscheranordnung, dass zumindest ein Temperatursensor direkt in das Material eines Wärmetauschergehäuseelementes eingebettet ist, so dass zum einen dort, wo ein derartiger Temperatursensor vorhanden ist, keine nach außen vollständig durchgehende und diesen nachträglich aufnehmende Öffnung bereitgestellt werden muss. Dichtigkeitsprobleme können somit im Wesentlichen vollständig ausgeschaltet werden. Auch kann das Eingliedern gleichzeitig beim Herstellungsvorgang dieses Gehäuseelements vorgenommen werden, so dass keine nachträglich durchzuführenden Arbeitsschritte von Nöten sind.

Beispielsweise kann vorgesehen sein, dass der wenigstens eine Temperatursensor von dem Material des Gehäuseelements vollständig umgeben ist. Um in bestimmten Bereichen im Fluidströmungsraum Informationen über die Temperatur des diesen durchströmenden Fluids erlangen zu können, wird vorgeschlagen, dass der wenigstens eine Temperatursensor einen in den Fluidströmungsraum ragenden Erfassungsabschnitt aufweist.

Bei einer besonders bevorzugten Ausgestaltungsform ist das Gehäuseelement aus Kunststoffmaterial, beispielsweise aus faserverstärktem Polyamid oder Polypropylen, gebildet. Auch im flüssigen Zustand weist ein derartiges Material eine Temperatur auf, die noch nicht ausreicht, um bei dem einzubettenden Temperatursensor Beschädigungen herbeizuführen.

Beispielsweise kann vorgesehen sein, dass das Gehäuseelement ein topfartig ausgebildetes und den Fluidströmungsraum außen begrenzendes Wärmetauscheraußengehäuse ist. Weiterhin ist es möglich, dass das Gehäuseelement ein zur Integration eines Heizgerätes vorgesehenes Gehäuseelement ist. Hier kann beispielsweise das wenigstens einen Temperatursensor eingebettet tragende Gehäuseelement ein Gehäuseelement eines Fahrzeugklimagerätes bzw. eines Fahrzeuggebläses sein, welches bereits derart ausgestaltet ist, dass ein zusätzliches Fahrzeugheizgerät bzw. eine Wärmetauscheranordnung für ein derartiges Heizgerät wenigstens teilweise in dieses bereits am Fahrzeug vorgesehene oder vorzusehende Gehäuseelement eingesetzt werden kann.

Die vorliegende Erfindung betrifft ferner ein Fahrzeugheizgerät mit einer erfindungsgemäßen Wärmetauscheranordnung.

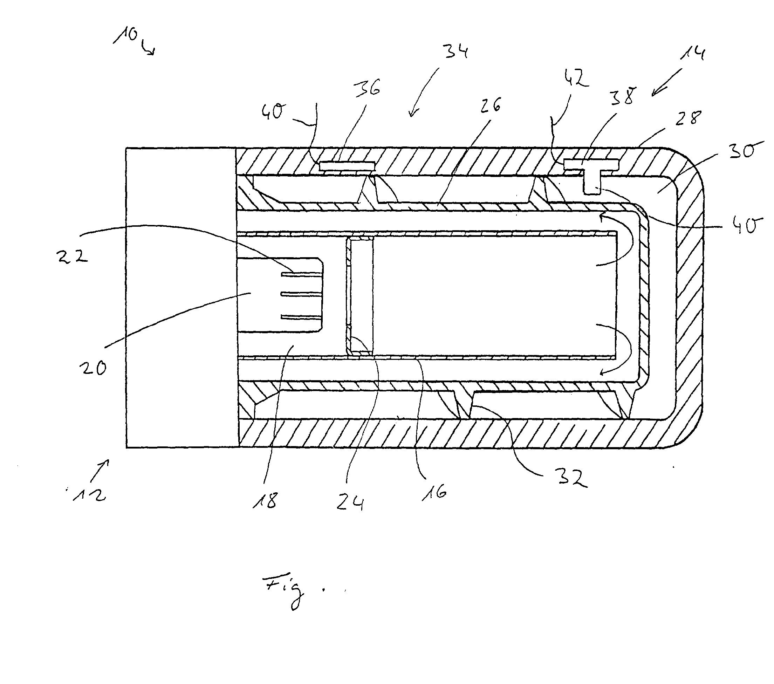

Nachfolgend wird mit Bezug auf die beiliegende Figur die erfindungsgemäße Ausgestaltung einer Wärmetauscheranordnung detailliert beschrieben. Diese Figur zeigt eine Längsschnittansicht einer erfindungsgemäßen Wärmetauscheranordnung bzw. eines diese aufweisenden Heizgerätes.

Die Figur zeigt ein Heizgerät 10, das beispielsweise in einem Kraftfahrzeug als Standheizung oder Zuheizer eingesetzt werden kann. Das Heizgerät 10 umfasst im Wesentlichen zwei Bereiche, nämlich einen Heizbrennerbereich 12 und einen Wärmetauscherbereich 14. Der Heizbrennerbereich 12, welcher im Wesentlichen nur schematisch angedeutet ist, umfasst beispielsweise ein Verbrennungsluftgebläse, eine Brennstoffzufuhr und all die damit in Zusammenhang stehenden Komponenten. Ferner umfasst der Heizbrenner eine in einem Teilabschnitt eines Flammrohrs 16 ausgebildete Brennkammer 18, in welcher zentral ein Verbrennungsluftzuführstutzen 20 mit einer Mehrzahl von Verbrennungslufteintrittsschlitzen 22 vorgesehen ist. Durch die Lufteintrittsschlitze 22 tritt die Verbrennungsluft in die Brennkammer 18 ein und wird dort mit dem ebenfalls in die Brennkammer beispielsweise über poröses Material eingespeisten Brennstoff verbrannt. Durch eine Flammblende 24 tritt die Verbrennungsflamme zusammen mit den Verbrennungsabgasen in den verbleibenden Bereich des Flammrohrs 16 ein. Am axial freien Ende des Flammrohrs 16 ist dieses offen, so dass die Verbrennungsabgase dort auf den Wärmetauscher 14 auftreffen und umgelenkt werden und an der Außenseite des Flammrohrs 16 wieder zurückströmen und über einen nicht dargestellten Auslass dann abgegeben werden.

Es sei hier darauf hingewiesen, dass der Aufbau des Heizbrenners und der zur Verbrennung vorgesehenen Komponenten hier nur schematisch dargestellt ist. Es ist selbstverständlich, dass hier verschiedenste andere Anordnungen zum Einsatz gelangen können.

Der Wärmetauscher 14 umfasst zwei ineinander eingesetzte und zwischen sich einen Fluidströmungsraum 30 begrenzende Gehäuseteile. Dabei begrenzt ein Wärmetauscherinnengehäuse 26 den zum Strömen der Verbrennungsabgase vorgesehenen Raumbereich nach innen hin und bildet gleichzeitig auch dasjenige Bauteil, durch welches die das Flammrohr 16 verlassenden Abgase axial umgelenkt werden. Das Wärmetauscheraußengehäuse 28 begrenzt den Fluidströmungsraum 30 nach außen hin und ist in einem axialen Endbereich, nämlich dem dem Heizbrenner 12 nahe gelegenen Endbereich, mit dem Wärmetauscherinnengehäuse 26 zum fluiddichten Abschluss des Fluidströmungsraums 30 dicht verbunden. Am Außenumfang des Wärmetauscherinnengehäuses ist eine wendelartig ausgebildete Rippenkonfiguration 32 vorgesehen, welche dafür sorgt, dass das den Fluidströmungsraum 30 durchströmende Fluid, beispielsweise zu erwärmendes Wasser oder zu erwärmende Luft, sich in definierter Art und Weise durch den Fluidströmungsraum 30 hinduroh bewegt und somit die durch die Verbrennungsabgase auf das Wärmetauscherinnengehäuse 26 übertragene Wärme sehr effizient aufnehmen kann.

Um den Betrieb des Heizgeräts 10 steuern zu können, ist es vorteilhaft, Information über die Temperatur des zu erwärmenden Fluids oder auch des bereits erwärmten Fluids zu erlangen. Es ist bekannt, zu diesem Zweck eine Temperatursensoranordnung vorzusehen, wobei beispielsweise ein Temperatursensor nahe dem Fluideintritt in den Fluidströmungsraum 30 angeordnet sein kann, und der andere Temperatursensor nahe dem Fluidaustritt angeordnet sein kann. Es kann somit erfasst werden, in welchem Ausmaß auf das zu erwärmende Fluid Wärme übertragen worden ist. Auch der in der Figur dargestellte Wärmetauscher 14 umfasst zwei Temperatursensoren 36, 38, deren Positionierung am Wärmetauscher 14 nur beispielhaft ist. Diese beiden Temperatursensoren 36, 38 könnten selbstverständlich auch an anderen Bereichen positioniert sein. Von Bedeutung ist, dass gemäß den Prinzipien der vorliegenden Erfindung die Temperatursensoren 36, 38 zumindest teilweise in das das Wärmetauscheraußengehäuse 28 bildende Material eingebettet sind. Dabei ist der Temperatursensor 36 vollständig von dem Material des Wärmetauscheraußengehäuses 28 umgeben. Lediglich die elektrische Kontaktierungsleitung führt durch das Material des Wärmetauscheraußengehäuses 28 hindurch nach außen. Ansonsten ist der Temperatursensor 36 vollständig von dem Material des Wärmetauscheraußengehäuses 28 umkapselt. Vor allem erkennt man, dass an der den Fluidströmungsraum 30 begrenzenden Oberfläche des Wärmetauscheraußengehäuses 28 im Bereich des Temperatursensors 36 keine Öffnung vorhanden ist, durch welche eine Leckage auftreten könnte.

Der Temperatursensor 38 ist so ausgestaltet, dass er mit einem Temperaturerfassungsabschnitt 40 desselben aus dem Wärmetauscheraußengehäuse 28 herausragt und in den Fluidströmungsraum 30 vorsteht. Es ist somit möglich, mit diesem Temperatursensor 38 beispielsweise die Fluidtemperatur nahe der Oberfläche des Wärmetauscherinnengehäuses 26 zu erfassen oder ggf. durch direktes Kontaktieren der Oberfläche des Wärmetauscherinnengehäuses 26 dessen Temperatur zu erfassen und somit Information für eine mögliche Überhitzungserkennung bereitzustellen. Auch im Bereich des Temperatursensors 28 ist ansonsten jedoch ein dichter Abschluss des Wärmetauscheraußengehäuses 28 vorgesehen. Auch hier ist lediglich die elektrische Kontaktierungsleitung 42 nach außen hin aus dem Material des Wärmetauscheraußengehäuses 28 herausgeführt.

Der wesentliche Vorteil der erfindungsgemäßen Ausgestaltung, bei welcher Temperatursensoren 36, 38 der Temperatursensoranordnung 34 zumindest teilweise direkt in das Material des Wärmetauscheraußengehäses 28 eingebettet werden, d.h. beim Herstellungsvorgang von diesem Material auch umgossen werden, ist, dass keine zusätzlichen Arbeitsvorgänge zum Einbringen von Öffnungen für Sensoren durchgeführt werden müssen und ebenso keine Arbeitsvorgänge zum nachträglichen Montieren von Temperatursensoren erforderlich sind. Des Weiteren können Fluidleckageprobleme praktisch vollständig ausgeschlossen werden. Es hat sich als vorteilhaft erwiesen, das Wärmetauscheraußengehäuse aus Kunststoffmaterial aufzubauen, beispielsweise aus faserverstärktem Polyamid oder Polypropylen. Wesentlicher Vorteil hierbei ist, dass dieses Material bei vergleichsweise niedrigen Temperaturen in einem flüssigen Zustand vorliegt, so dass beim Herstellungsvorgang des Wärmetauscheraußengehäuses 28, bei welchem gleichzeitig auch die Temperatursensoren 38, 36 in dieses eingegossen werden, eine temperaturinduzierte Beschädigung der Temperatursensoren 36, 38 ausgeschlossen werden kann.

Es ist selbstverständlich, dass das Einbetten der Temperatursensoren in ein Gehäuseteil des Wärmetauschers auch dann realisiert werden kann, wenn hierfür beispielsweise ein in einem Fahrzeug ohnehin vorhandenes Gehäuse genutzt werden soll, so dass das Heizgerät in ein bereits vorhandenes Gehäuse, beispielsweise eines Fahrzeuggebläses oder einer Fahrzeugklimaanlage, integriert werden soll.

## Patentansprüche

1. Wärmetauscheranordnung, insbesondere für ein Fahrzeugheizgerät, umfassend einen von einer Gehäuseanordnung (26, 28) umschlossenen Fluidströmungsraum (30) sowie eine Temperatursensoranordnung (34) zur Erfassung einer mit der Temperatur eines den Fluidstömungsraum (30) durchströmenden Fluids in Zusammenhang stehenden Größe, wobei die Temperatursensoranordnung (34) wenigstens einen Temperatursensor (36, 38) umfasst, welcher in das Material eines wenigstens einen Teil der Gehäuseanordnung (26, 28) bildenden Gehäuseelementes (28) wenigstens teilweise eingebettet ist.

2. Wärmetauscheranordnung nach Anspruch 1,
**dadurch gekennzeichnet, dass** der wenigstens eine Temperatursensor (36) von dem Material des Gehäuseelements (28) vollständig umgeben ist.

3. Wärmetauscheranordnung nach Anspruch 1 oder 2,
**dadurch gekennzeichnet, dass** der wenigstens eine Temperatursensor (38) einen in den Fluidströmungsraum (30) ragenden Erfassungsabschnitt (40) aufweist.

4. Wärmetauscheranordnung nach einem der Ansprüche 1 bis 3,
**dadurch gekennzeichnet, dass** das Gehäuseelement (28) aus Kunststoffmaterial gebildet ist.

5. Wärmetauscheranordnung nach einem der Ansprüche 1 bis 4,
**dadurch gekennzeichnet, dass** das Gehäuseelement (28) aus faserverstärktem Polyamid oder Polypropylen gebildet ist.

6. Wärmetauscheranordnung nach einem der Ansprüche 1 bis 5,
**dadurch gekennzeichnet, dass** das Gehäuseelement (28) ein topfartig ausgebildetes und den Fluidströmungsraum (30) außen begrenzendes Wärmetauscheraußengehäuse (28) ist.

7. Wärmetauscheranordnung nach einem der Ansprüche 1 bis 5,
**dadurch gekennzeichnet, dass** das Gehäuseelement ein zur Integration eines Heizgerätes vorgesehenes Gehäuseelement ist.

8. Fahrzeugheizgerät, umfassend eine Wärmetauscheranorndung (14) nach einem der vorangehenden Ansprüche.
